# EUROPEAN PATENT SPECIFICATION

(11) **EP 2 285 872 B1**
(45) Date of publication and mention of the grant of the patent: **03.07.2019**
(21) Application number: 09745575.2
(22) Date of filing: 13.05.2009
(51) Int. Cl.: C08J 3/22, C08J 9/00, C08K 5/20, C08L 23/02

(54) **PHYSICALLY BLOWN POLYETHYLENE FOAM**
PHYSIKALISCH GEBLASENER POLYETHYLENSCHAUM
MOUSSE DE POLYÉTHYLÈNE PHYSIQUEMENT SOUFFLÉE

(30) Priority: 16.05.2008 EP 08009081
(43) Date of publication of application: 23.02.2011
(73) Proprietor: Saudi Basic Industries Corporation, Riyadh 11422 (SA)
(72) Inventor: SENGUPTA, Pratip, NL-6160 GA Geleen (NL); VOS DE, Roelof, Franciscus, Gerardus, Maria, NL-6160 GA Geleen (NL); KRIST, Johan, Maira, NL-6160 GA Geleen (NL)
(74) Representative: Sabic Intellectual Property Group
(86) International application number: PCT/EP2009/003463
(87) International publication number: WO 2009/138241

(56) References cited:
- WO-A-2007/071274
- US-A1- 2005 106 378
- DATABASE WPI Week 2008 Thomson Scientific, London, GB; AN 2008-f86210 XP002501983 FUJII H, ITOU T,AITOU M, TOKUNAGA Y.: "Polyolefin-type resin foam used as internal insulator and shock absorbing material, contains polyolefin-type resin composition containing rubber and/or thermoplastic elastomer, polyolefin-type resin, and aliphatic type-compound" & WO 2008/041617 A (NITTO DENKO CORP [JP]; SAITOU MAKOTO; TOKUNAGA YASUYUKI; ITOU TAKIO; F) 10 April 2008 (2008-04-10) & WO 2008/041617 A (NITTO DENKO CORP [JP]; SAITOU MAKOTO; TOKUNAGA YASUYUKI; ITOU TAKIO; F) 10 April 2008 (2008-04-10)
- DATABASE CA [Online] CHEMICAL ABSTRACTS SERVICE, COLUMBUS, OHIO, US; NAKAYAMA, YOSHIAKI ET AL: "Foamed polyethylene fiber" XP002501219 retrieved from STN Database accession no. 1975:516710 & JP 49 021261 B (ASAHI CHEMICAL INDUSTRY CO., LTD.) 30 May 1974 (1974-05-30)
- DATABASE CA [Online] CHEMICAL ABSTRACTS SERVICE, COLUMBUS, OHIO, US; HIRUKAWA, HIROSHI ET AL: "Crosslinked polyolefin compositions" XP002501220 retrieved from STN Database accession no. 1979:440416 & JP 54 036357 A (FURUKAWA ELECTRIC CO., LTD., JAPAN) 17 March 1979 (1979-03-17)
- DATABASE CA [Online] CHEMICAL ABSTRACTS SERVICE, COLUMBUS, OHIO, US; SAKUMA, KANA ET AL: "Pigment masterbatches for resin moldings" XP002501221 retrieved from STN Database accession no. 1989:39882 & JP 63 113057 A (TOYO INK MFG. CO., LTD., JAPAN) 18 May 1988 (1988-05-18)
- DATABASE CA [Online] CHEMICAL ABSTRACTS SERVICE, COLUMBUS, OHIO, US; WANG, SHIJIE: "An environment-friendly filler masterbatch with glowing-stone appearance" XP002501222 retrieved from STN Database accession no. 2005:1161962 & CN 1 583 859 A (WANG SHIJIE, PEOP. REP. CHINA) 23 February 2005 (2005-02-23)
- DATABASE CA [Online] CHEMICAL ABSTRACTS SERVICE, COLUMBUS, OHIO, US; LIU, BOYUAN ET AL: "Filler masterbatch for transparent plastic film" XP002501223 retrieved from STN Database accession no. 2006:690194 & CN 1 693 347 A (SHANGHAI LINDA PLASTIC CHEMICAL CO., LTD., PEOP. REP. CHINA) 9 November 2005 (2005-11-09)

## Description

The invention relates to a process for physically blown polyethylene foam.

Requirements for physical foaming of polyolefin's are disclosed in "How to choose a polyolefin grade for physical foaming "by Henk Ruinaart (Blowing agents and foaming processes 2005; Stuttgart Germany 10-11 May 2005).

Nucleating agents are important additives in physically blown polyethylene foams. Nucleating agents are solid particles which initiate cell nucleation; determine cell size and its distribution in the foam. The nature and the particle size of the nucleating agent play a crucial role in respect of the cell size and any specific nucleating agent results in a specific range of cell sizes. Suitable nucleating agents include for example inorganic solid particles for example talcum and micro talcum and organic agents for example ethylene bis stearamide (EBS) and a mixture of sodium bicarbonate and citric acid and ethylene bis stearamide. In general talcum may be used for example to obtain cells in the range between for example 1000 micrometers and 6000 micrometers, micro talcum may be applied to obtain cell sizes between for example 500 micrometers and 6000 micrometers. US 2005/0106378 describes for example the formation of a low density polyethylene foam in the presence of a nucleating agent masterbatch comprising 50 wt % active talc.

A mixture of sodium bicarbonate and citric acid may be used to obtain cell sizes between for example 200 micrometers and 2000 micrometers and EBS when dozed as pure material can be applied to produce cell sizes smaller than 150 micrometers.

At present no nucleating agent is capable of generating cell sizes in the complete range between 50 and 8000 micrometers.

The objective of the present invention is to provide a non-crosslinked, physically blown polyethylene foam whose cell structure can be controlled over a wider range of cell sizes.

This is achieved by a process for physical foaming of polyethylene in the presence of a masterbatch comprising
- a nucleating organic compound which, on changing to the solid phase, forms crystals and which in its melt phase is soluble in the molten polyethylene and
- polyethylene
wherein the polyethylene in the masterbatch is low density polyethylene, having a density ranging between 915 and 935 kg/m³, wherein the amount of polyethylene in the masterbatch ranges between 50.0 % by weight and 99.9 % by weight and the amount of the organic compound ranges between 0.1 % by weight and 50.0 % by weight, wherein the nucleating organic compound is selected from an amide selected from caproamide, caprylamide, undecylamide, lauramide, myristamide, palmitamide, behenamide, arachidamide, hydroxystearamide , alkylenediyl-bis-alkanamide, (C2-C32) alkylenediyl-bis-(C2-C32) alkanamide, ethylene bistearamide, butylene bistearamide, hexamethylene bistearamide and/or ethylene bibehenamide , an amine and/or an ester of an aliphatic (C10-C34) carboxylic acid
and wherein polyethylene to be foamed is low density polyethylene.
having a density ranging between 915 and 935 kg/m³.

The ingredients of this masterbatch are applied as a nucleating agent masterbatch during the production of polyethylene foam.

The nucleating agent according to the invention generates cell sizes in the complete range between 50 and 8000 micrometers.

The foam cell sizes can be controlled accurately in said range.

The use of the masterbatch results in uniformity of cell sizes with a narrow cell size distribution.

When dozed in amounts exceeding a certain threshold, fine cell structure is generated. The fine cellular structure is similar to that of crosslinked chemically blown foam. When dozed in amounts less than the threshold, very uniform, coarse cell structure is generated. With the help of the nucleating agent according to the invention one can fine tune the cell size from very coarse cell structure to very fine cell structure by selecting the amount of the nucleating agent.

Important advantages are obtained during the foaming process because of the excellent dispersion of the active ingredient in the masterbatch. After dilution the nucleating agent is also dispersed in a superior way in the polyethylene. Over the complete range defects in the foamed end product are absent.

The foam obtained in the presence of the nucleating agent comprising the nucleating agent which, on changing to the solid phase, forms crystals and which in its melt phase is soluble in the molten polyethylene and polyethylene exhibits a good surface structure without holes in the foam cross-section or other defects during extrusion. At high concentrations of the nucleating agent the obtained cell sizes reach values as obtainable with a more costly chemical foaming process.

Preferably, the difference between the melting temperature and the crystallization temperature of the nucleating agent is less than 20°C.

More preferably, the difference between the melting temperature and the crystallization temperature of the nucleating agent is less than 10°C.

Preferably, the difference between the crystallization temperatures of polyethylene and the nucleating agent is greater than 10°C.

As a result, the nucleating agent will have crystallized before the polyethylene changes to the solid phase at its crystallization temperature.

Preferably, the difference between the crystallization temperatures of polyethylene and the nucleating agent is greater than 20°C.

The crystallization temperature can be determined by DSC measurement (ASTM D3417-97).

The nucleating organic compound which, on changing to the solid phase, forms crystals and which in its melt phase is soluble in the molten polyethylene may be an amide, an amine and/or an ester of an aliphatic (C₁₀-C₃₄) carboxylic acid. The acid may be a saturated or unsaturated acid.

The most preferred amide is ethylene bistearamide (EBS).

Suitable amines are for instance (C₂-C₁₈) alkylene diamines such as for example ethylene biscaproamine and hexamethylene biscaproamine .

Preferred esters of a saturated or unsaturated aliphatic (C₁₀-C₃₄) carboxylic acid are the esters of an aliphatic (C₁₆-C₂₄) carboxylic acid.

The polyethylene in the masterbatch is selected from low density polyethylene (LDPE),
The melt flow index (MFR₂) ranges between 0.1 and 100 g/10 min.

Preferably the density ranges between 918 and 926 kg/m³

Preferably the melt flow index (MFR₂) ranges between 0.3 and 65 g/10 min.

The masterbatch according to the invention may in addition contain other nucleating agents such as for example talcum, micro talcum and a mixture of sodium bicarbonate and citric acid. The amounts of these nucleating agents are lower than the amounts of the organic nucleating compound.

According to a preferred embodiment of the invention the nucleating agent comprises
- EBS and
- LDPE.

Preferably the amount of the nucleating organic compound in the masterbatch is at least 0.5 %, more preferably at least 1, 2, 3, or even 5 %; and at most about 40, 30 or 20.0 % by weight.

In a preferred embodiment of the invention the masterbatch is prepared in such a way that the nucleating organic compound is homogeneously distributed in the polymer carrier in a micro scale mixing device in order to prevent micelle formation. Examples of these mixing devices are the bus kneader and the counter rotating double screw extruder each having well defined mixing elements for maximizing shear and elongational flows.

The polyethylene to be foamed is LDPE.

Generally LDPE has a melt flow rate (MFR) at 2.16 kg load and 190°C ranging between 0.1 and 30 g/10 min. Preferably MFR ranges between 0.2 and 3 g/10 min.
Preferably the density of the LDPE blend ranges between 921 kg/m³ and 935 kg/m³

LDPE homo or copolymers to be applied as the carrier or to be applied as the polymer to be foamed may be obtained for example by a tubular process, by an autoclave process or by a metallocene based process. A suitable copolymer may be obtained with a process as disclosed in WO 2006094723. This patent application discloses LDPE obtained with a process wherein the polymerisation takes place in a tubular reactor at a peak temperature between 290°C and 350°C, the co monomer is a di-or higher functional (meth) acrylate such as for example BDDMA and wherein the co monomer is applied in an amount between 0.008 mol % and 0.200 mol % relative to the amount of ethylene copolymer.

The preferred density ranges between 918 and 926 kg/m³

The preferred melt flow index (MFR₂) ranges between 0.3 and 65 g/10 min.

Preferably, the master batch is applied in an amount ranging between 0.1 and 50 wt. % relative to polyethylene to be foamed. More preferably this amount ranges between 0.2 and 20 wt. %.

The organic nucleating agent is added as a solid crystalline compound and, on melting in the extruder, becomes liquid, where after it is mixed with the molten polymer. Next, the liquid blowing gas is injected and homogeneously mixed with the PE melt. Cooling takes place in the second section of the mixing extruder or in a special cooling extruder (tandem extrusion) and/or in a special melt cooler (with or without mixing sections) wherein the organic nucleating agent crystallizes on reaching its crystallization temperature.

Besides the polymer to be foamed and the masterbatch the foaming formulation contains at least a blowing agent and preferably also a cell stabilizer. Cell stabilisers prevent collapse of fresh extruded foams by preventing also the quick loss of blowing agent to the atmosphere.

Furthermore the composition may contain additives such as flame retardants, fillers, insulation promoters, slip agents, pigments, lubricants, antistatic agents, processing stabilizers, chemical blowing agents and/or UV stabilizers. These additives will be selected by the man skilled in the art from the generally known agents. These additives may be added pure or as a masterbatch before mixing this masterbatch with the polymer to be foamed. The masterbatch according to the invention can also be blended with one or more other masterbatches during the foaming process. Preferably these masterbatches comprise a polyolefin, preferably a polyethylene, matrix with an ingredient agent dispersed.

According to a preferred embodiment of the invention the foaming process takes place in the presence of a mixture comprising a masterbatch comprising
- a nucleating organic compound which, on changing to the solid phase, forms crystals and which in its melt phase is soluble in the molten polyethylene and
- polyethylene
and a masterbatch comprising an olefin polymer and a mixture of sodium bicarbonate and citric acid.

The olefin polymer is LDPE.

The weight ratio between these masterbatches depends on the specific field of application of the foam.

Besides the use of mixture comprising these two masterbatches it is also possible to apply one masterbatch comprising all ingredients.

Suitable examples of physical blowing agents include chlorofluorocarbons, hydrochlorocarbons, hydrofluorcarbons, hydrocarbons and atmospheric gases such as isobutane, CO₂, pentane, butane and/or nitrogen.

Preferred physical blowing agents are isobutane and CO₂.

Suitable cell stabilizers include for example glycerol monostearate (GMS), mixtures of GMS and glycerol monopalmitate (GMP) and/or amides such as for example stearyl stearamide and/or stearamide.

Preferably, the cell stabiliser is stearamide.

The composition comprising the polyethylene and the masterbatch according to the invention is extruded at a temperature just above the crystallization temperature of the polyethylene. The exit temperature from the die opening usually is maximum 10°C and preferably maximum 5°C higher than the crystallization temperature. The temperature at which the viscosity increase begins due to the crystallization of polyethylene corresponds with the crystallization onset temperature from a DSC curve. In order to achieve on the one hand the maximum viscosity and hence the desired fine cellular structure and, on the other, to prevent the melt from "freezing" (crystallizing too rapidly) in the outlet, the melt temperature is maintained at about 5°C and preferably about 2°C above the crystallization onset temperature. The cell diameter can be determined with for example a light microscope with image projection or with a Scanning Electron Microscope (SEM).

The LDPE foam obtained with the nucleating agent according to the inventions may have the following characteristics a density of between 10 and 400 kg/m³ Preferably this value ranges between 20 and 300 kg/m³

The foam obtained with the nucleating agent according to the invention of the invention may be used as for example foam sheeting for floor insulation, as foam section for protecting glass plates, as foamed heat insulation tubing for copper hot-water pipes, as foamed packaging film and as decoration.

US 2005/0106378 is directed to a laminate for use as a thermal insulating material includes a layer of a metal laminated to an expanded foam web. The foam web is formed with a plurality of ribs projecting from one surface of the web in the length direction thereof. The metal layer is laminated to the free edges of the ribs so as to define a plurality of closed channels extending in the length direction of the laminate. Example 1 discloses a masterbatch comprising active talc and low density polyethylene resin in combination with a permeation modifier mixture. The masterbatch according to US 2005/0106378 does not comprise a nucleating organic compound. a nucleating organic compound which, on changing to the solid phase, forms crystals and which in its melt phase is soluble in the molten polyethylene.

WO2007/071274 is directed to a process for manufacturing an electric cable comprising at least one core comprising a conductor and an insulating coating surrounding the conductor is described, the process comprising the steps of: providing a polyolefin material, a silane-based cross-linking system and a foaming system comprising at least one exothermic foaming agent in an amount of from 0.1% to 0.5% by weight with respect to the total weight of the polyolefin material; forming a blend with the polyolefin material, the silane-based cross-linking system and the foaming system and extruding the blend on the conductor to form the insulating coating . The process according to WO2007/071274 is not directed to a physically foaming process because chemically foaming agents such as azodicarbonamide, azobisisobutyronitrile and diazoaminobenzene are applied. The foaming system is added to the polyolefin as a masterbatch comprising a polymer material and an amount of foaming agent. WO2007/071274 does not disclose a masterbatch which can be applied as nucleating agent.

WO2008/041617 discloses a foam comprising at least (A) a rubber and/or a thermoplastic elastomer, (B) a polyolefin-based resin and (C) at least one aliphatic compound selected from a fatty acid, a fatty acid amide and a fatty acid metal soap each having a polar functional group and the content of the aliphatic compound (C) is 1-5 parts by weight based on 100 parts by weight total amount of the component (A) and the component (B). The essential component of this foam composition is the rubber component and/or a thermoplastic elastomer. The composition of WO2008/041617 does not comprise a master batch comprising polyethylene and a nucleating agent.

The invention will be elucidated by means of the following non-restrictive examples.

### Example I

A composition consisting of
- 97.5 wt. % LDPE (SABIC® LDPE 2102TX00 with melt index of 1.9 dg/min and density of 921 kg/m³),
- 0.5 wt.% ethylene bistearamide masterbatch (10% by weight EBS and 90 % by weight SABIC® LDPE 2102TX00) and
- 2.0 wt % stearamide
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 95°C.

A very uniform coarse cellular foamed strip was obtained having a foam density of 24.3 kg/m³ was obtained.

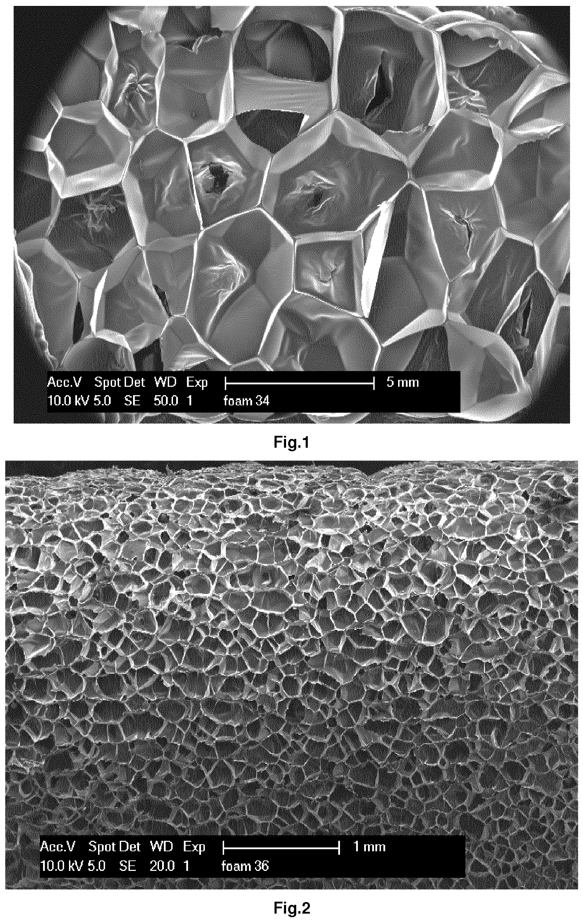

The SEM photograph (Fig. 1) shows the obtained foam with an average cell diameter of 3500 micrometers and a regular structure of the cell diameter between 1000 and 8000 micrometers

### Example II

A composition consisting of
- 88 wt.% LDPE (SABIC® LDPE 2102TX00 with melt index of 1.9 dg/min and density of 921 kg/m³),
- 10 wt.% ethylene bistearamide masterbatch (10% by weight EBS and 90% by weight SABIC® LDPE 2102TX00) and
- 2 wt % stearamide
was extruded in a Schwabentan single-screw extruder followed by three Sulzer static mixers and an extrusion head with an outlet opening of 25 x 0.75 mm. The foaming agent was isobutane

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 95°C.

A fine cellular foamed strip was obtained having a foam density of 37.5 kg/m³.

The SEM photograph (Fig. 2) shows the obtained foam with an average cell diameter of 100 micrometers and a regular structure of the cell diameter between 50 and 200 micrometers.

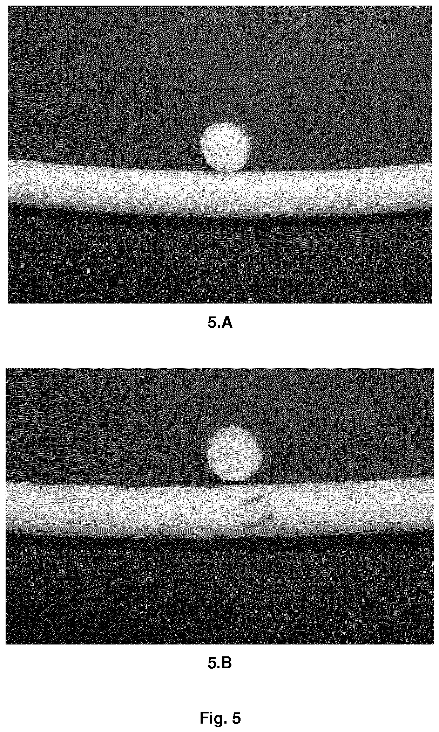

A Figure of the foam obtained from this EBS masterbatch is shown in Figure 5 (5.B)

### Comparative Example A

A composition consisting of
- 96 wt.% LDPE (SABIC® LDPE 2102TX00 with melt index of 1.9 dg/min and density of 921 kg/m³)
- 2 wt.% talcum masterbatch (10% by weight talcum HTP05 from ImiFabi and 90 % by weight SABIC® LDPE 2102TX00) and
- 2 wt % stearamide
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 102°C.

A fine cellular foamed strip was obtained having a foam density of 29 kg/m³.

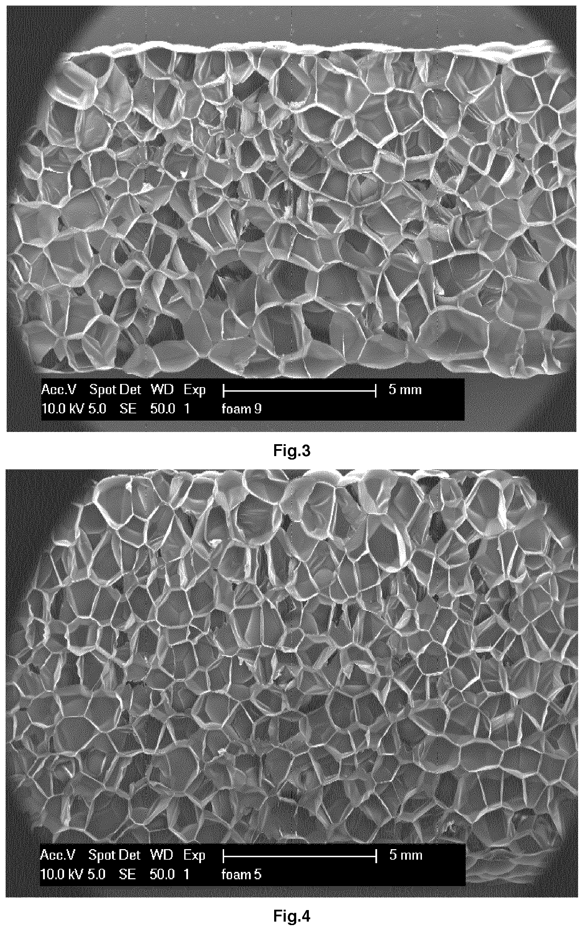

The SEM photograph (Figure 3) shows the obtained foam with an average cell diameter of 1500 micrometers and a regular structure of the cell diameter between 1000 and 3000 micrometers.

### Comparative Example B

A composition consisting of
- 90 wt.% LDPE (SABIC® LDPE 2102TX00 with melt index of 1.9 dg/min and density of 921 kg/m³),
- 8 wt.% talcum masterbatch (10% by weight talcum HTP05 from ImiFabi and 90 % by weight SABIC® LDPE 2102TX00)
- 2 wt % stearamide and
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 102°C.

A fine cellular foamed strip was obtained having a foam density of 25 kg/m³.

The SEM photograph (Fig. 4) shows the obtained foam with an average cell diameter of 1250 micrometers and a regular structure of the cell diameter between 500 and 2000 micrometers.

Comparison of the Examples I, II and the Comparative Examples A and B shows that the use of EBS masterbatch results in a wide range of cell sizes whereas the use of a talcum masterbatch results in a cell size being more narrow.

### Example III

A composition consisting of
- 87.75 wt.% LDPE (SABIC® LDPE 2102TX00 with melt index of 1.9 dg/min and density of 921 kg/m³),
- 10 wt.% ethylene bistearamide masterbatch (10% by weight EBS and 90% by weight SABIC® LDPE 2102TX00)
- 0.25 wt % of Hydrocerol CF20E (a mixture of sodium bicarbonate and citric acid ; commercial nucleating agent from Clariant) and
- 2 wt % stearamide
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 95°C.

A fine cellular foamed strip was obtained having a foam density of 30 kg/m³, The foam had combined advantages of the use of EBS and the use of a mixture of sodium bicarbonate and citric acid as a nucleating agent.

The obtained foam has a very uniform cross-section without holes and containing microcellular cells (< 150 micrometers).

The surface features were excellent.

A Figure of the obtained foam with good surface features obtained using the blend of EBS-MB and hydrocerol CF20E is shown in Figure 5 (5.A.). The Figure of the foam obtained from EBS-MB alone (Example II) is shown in Figure 5 (5.B)

### Comparative Example C

A composition consisting of
- 88 wt.% LDPE (SABIC® LDPE 2102TX00 with melt index of 1.9 dg/min and density of 921 kg/m³)
- 10 wt.% ethylene bistearamide pure and
- 2 wt % stearamide
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 95°C.

A fine cellular foamed strip was obtained with cell sizes less than 150 micrometers.

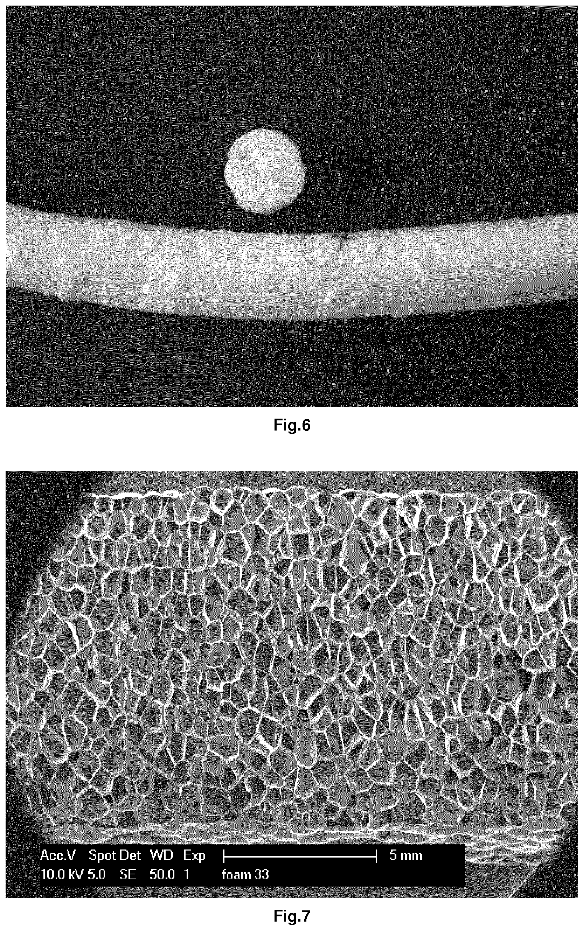

A cross-section of the obtained foam (Figure 6) shows holes. The surface was rough with signs of collapse.

### Comparative example D

A composition consisting of
- 97.6 wt.% LDPE (SABIC® LDPE 2102TX00 with melt index of 1.9 dg/min and density of 921 kg/m³)
- 0.4 wt.% Hydrocerol CF20E and
- 2 wt % stearamide
was extruded in a Schwabentan single-screw extruder followed by three Sulzer static mixers and an extrusion head with an outlet opening of 25 x 0.75 mm. The foaming agent was isobutane.

The extruder throughput was 3.5 kg/hour, the injected quantity of isobutane was 10 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 95°C. A fine cellular foamed strip was obtained with average cell sizes of 650 micrometers (Figure 7). The cell sizes were larger than the cell sizes obtained with use of the EBS-masterbatch.

## Claims

1. A process for physical foaming of polyethylene in the presence of a masterbatch comprising
• a nucleating organic compound which, on changing to the solid phase, forms crystals and which in its melt phase is soluble in the molten polyethylene and
• polyethylene
wherein the polyethylene in the masterbatch is low density polyethylene, having a density ranging between 915 and 935 kg/m³, wherein the amount of polyethylene in the masterbatch ranges between 50.0 % by weight and 99.9 % by weight and the amount of the organic compound ranges between 0.1 % by weight and 50.0 % by weight, wherein the nucleating organic compound is selected from an amide selected from caproamide, caprylamide, undecylamide, lauramide, myristamide, palmitamide, behenamide, arachidamide, hydroxystearamide , alkylenediyl-bis-alkanamide, (C₂-C₃₂) alkylenediyl-bis-(C₂-C₃₂) alkanamide, ethylene bistearamide, butylene bistearamide, hexamethylene bistearamide and/or ethylene bibehenamide , an amine and/or an ester of an aliphatic (C₁₀-C₃₄) carboxylic acid
and wherein polyethylene to be foamed is low density polyethylene having a density ranging between 915 and 935 kg/m³,

2. A process according to Claim 1 **characterized in that** the amide is ethylene bistearamide.

3. A process for physical foaming of polyethylene in the presence of a masterbatch according to any one of Claims 1-2 and a masterbatch comprising a mixture of sodium bicarbonate and citric acid.

## Patentansprüche

1. Verfahren zum physikalischen Verschäumen von Polyethylen in Gegenwart eines Masterbatch, umfassend
• eine keimbildende organische Verbindung, die beim Übergang in die feste Phase Kristalle bildet und in ihrer Schmelzephase in dem schmelzflüssigen Polyethylen löslich ist, und
• Polyethylen,
wobei es sich bei dem Polyethylen in dem Masterbatch um Polyethylen niederer Dichte mit einer Dichte im Bereich zwischen 915 und 935 kg/m³ handelt, wobei die Menge von Polyethylen in dem Masterbatch im Bereich zwischen 50,0 Gew.-% 99,9 Gew.-% liegt und die Menge der organischen Verbindung im Bereich zwischen 0,1 Gew.-% und 50,0 Gew.-% liegt, wobei die keimbildende organische Verbindung aus einem Amid, das aus Caproamid, Caprylamid, Undecylamid, Lauramid, Myristamid, Palmitamid, Behenamid, Arachidamid, Hydroxystearamid, Alkylendiyl-bis-alkanamid, (C₂-C₃₂)-Alkylendiyl-bis-(C₂-C₃₂)-alkanamid, Ethylenbistearamid, Butylenbistearamid, Hexamethylenbistearamid und/oder Ethylenbibehenamid ausgewählt ist, einem Amin und/oder einem Ester einer aliphatischen (C₁₀-C₃₄)-Carbonsäure ausgewählt ist
und wobei es sich bei dem zu verschäumenden Polyethylen um Polyethylen niederer Dichte mit einer Dichte im Bereich zwischen 915 und 935 kg/m³ handelt.

2. Verfahren nach Anspruch 1, **dadurch gekennzeichnet, dass** es sich bei dem Amid um Ethylenbistearamid handelt.

3. Verfahren zum physikalischen Verschäumen von Polyethylen in Gegenwart eines Masterbatch nach einem der Ansprüche 1-2 und eines Masterbatch, der eine Mischung von Natriumhydrogencarbonat und Citronensäure umfasst.

## Revendications

1. Procédé pour le moussage physique de polyéthylène en présence d'un mélange maître comprenant
• un composé organique de nucléation qui, lorsqu'il passe en phase solide, forme des cristaux et qui dans sa phase fondue est soluble dans le polyéthylène fondu et
• du polyéthylène
dans lequel le polyéthylène dans le mélange maître est du polyéthylène basse densité ayant une masse volumique comprise entre 915 et 935 kg/m³, dans lequel la quantité de polyéthylène dans le mélange maître est comprise entre 50,0 % en poids et 99,9 % en poids et la quantité du composé organique est comprise entre 0,1 % en poids et 50,0 % en poids, dans lequel le composé organique de nucléation est choisi entre un amide choisi entre le caproamide, le caprylamide, l'undécylamide, le lauramide, le myristamide, le palmitamide, le béhénamide, l'arachidamide, l'hydroxystéaramide, un alkylènediylbis(alcanamide), un (alkylène en C₂-C₃₂) diylbis (alcanamide en C₂-C₃₂), l'éthylènebis(stéaramide), le butylènebis(stéaramide), l'hexaméthylènebis(stéaramide) et/ou l'éthylènebis(béhénamide), une amine et/ou un ester d'un acide carboxylique en C₁₀-C₃₄ aliphatique et
dans lequel le polyéthylène à mousser est de faible densité ayant une masse volumique comprise entre 915 et 935 kg/m³.

2. Procédé selon la revendication 1 **caractérisé en ce que** l'amide est l'éthylènebis(stéaramide).

3. Procédé pour l'expansion physique de polyéthylène en présence d'un mélange maître selon l'une quelconque des revendications 1-2 et d'un mélange maître comprenant un mélange de bicarbonate de sodium et d'acide citrique.
